(19) Europäisches Patentamt
European Patent Office
Office européen des brevets

(11) EP 1 754 741 A1

(12) EUROPEAN PATENT APPLICATION
published in accordance with Art. 158(3) EPC

(43) Date of publication:
**21.02.2007 Bulletin 2007/08**

(21) Application number: **04745856.7**

(22) Date of filing: **08.06.2004**

(51) Int Cl.:
***C08G 77/14*** *(2006.01)*

(86) International application number:
**PCT/JP2004/008299**

(87) International publication number:
**WO 2005/121219 (22.12.2005 Gazette 2005/51)**

(84) Designated Contracting States:
**BE CH DE LI**

(71) Applicant: **DAICEL CHEMICAL INDUSTRIES, LTD.**
**Sakai-shi, Osaka 590-8501 (JP)**

(72) Inventor: **OKAZAKI, Akira**
**Otake-shi, Hiroshima 739-0651 (JP)**

(74) Representative: **Grünecker, Kinkeldey,**
**Stockmair & Schwanhäusser**
**Anwaltssozietät**
**Maximilianstrasse 58**
**80538 München (DE)**

# (54) SILICONE-MODIFIED EPOXY RESIN

(57) Disclosed is a silicone-modified epoxy resin (D) including a structural unit represented by following Formula (4). The epoxy resin (D) is a product of the epoxidation of a vinyl group of a vinyl-containing polyether compound (C) with an oxidizing agent, the vinyl-containing polyether compound (C) has a structural unit represented by following Formula (3) and is a product of the reaction between an epoxy group of 4-vinylcyclohexene-1-oxide (A) represented by following Formula (1) and a silanol group of a silanol-containing organopolysiloxane (B) represented by following Average Compositional Formula (2). The silicone-modified epoxy resin is a polyfunctional cycloaliphatic epoxy resin having an oxycyclohexane skeleton and being improved in thermal stability and hygroscopicity absorptivity.

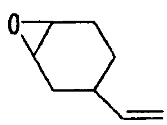

(1)

$$R_aSi(OH)_bO_{(4-a-b)/2} \quad (2)$$

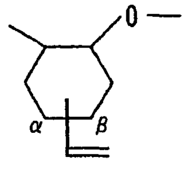

(3)

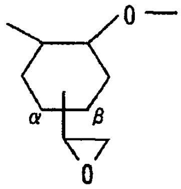

(4)

EP 1 754 741 A1

In Formula (2), "a" is 0.01 to 1.99; "b" is 1.99 to 0.01; and R is a residue of monovalent organic compound having one to nine carbon atoms, and the vinyl group in Formula (3) and the epoxy group in Formula (4) are bound at the alpha-position or the beta-position in Formulae (3) and (4), respectively.

Fig.1

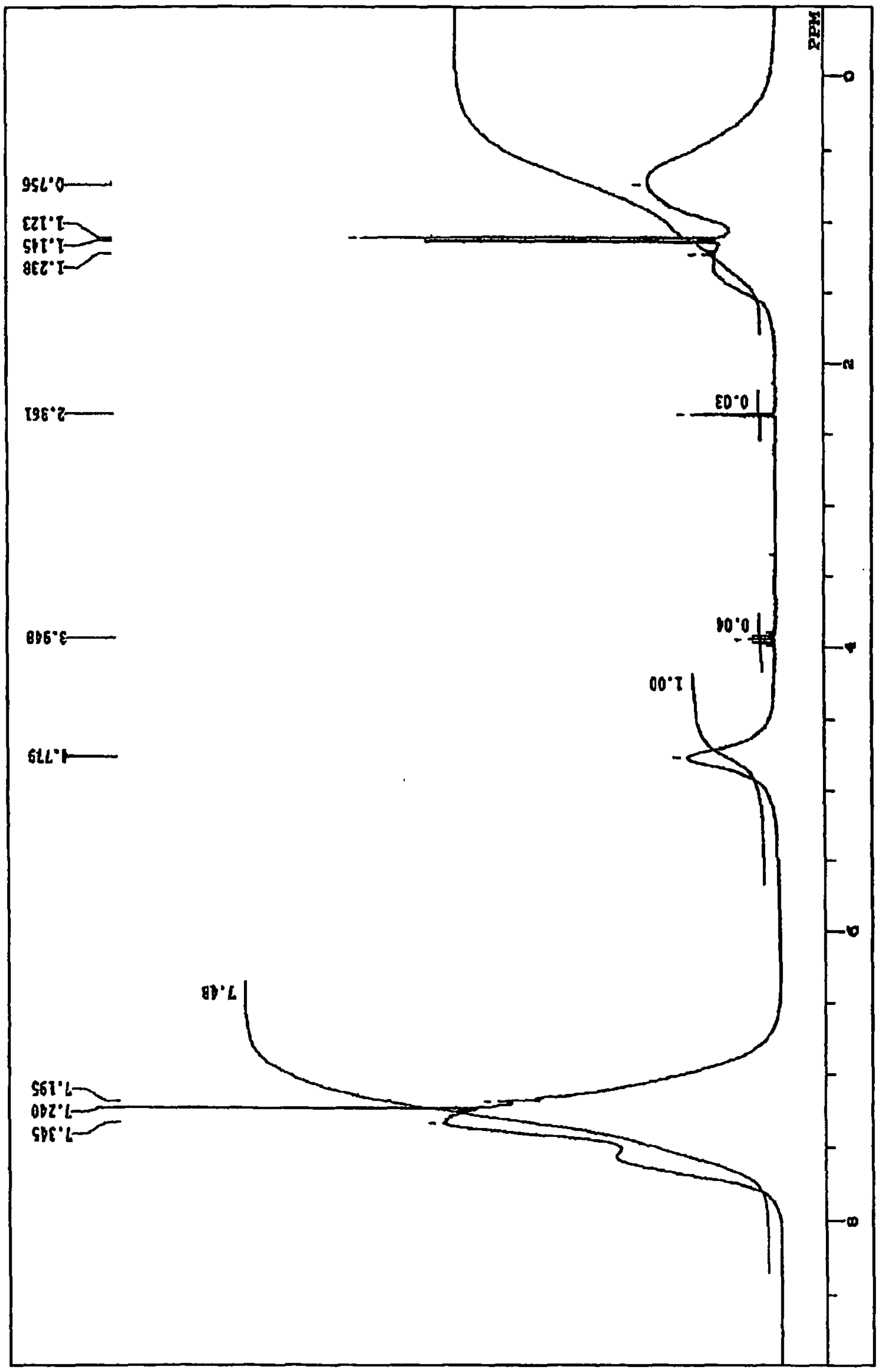

## Description

### Technical Field

The present invention relates to silicone-modified epoxy resins that are excellent in thermal stability and moisture resistance, induce less internal stress, and are colorless and transparent.

### Background Art

Most generally widely used epoxy resins are bisphenol-A type epoxy resins that are prepared as a result of the reaction between bisphenol-A and epichlorohydrin. They are available as a wide variety of products ranging from liquids to solids according to their degrees of polymerization. They have such high reactivity as to be cured using a polyamine at ordinary temperature.

The resulting cured products(articles), however, are disadvantageous in their poor weather resistance, insufficient electrical properties, and low heat distortion temperature, although they are excellent in water resistance and are tough.

Phenol novolac and cresol novolac epoxy resins are used as sealing resins for integrated circuits (ICs), large-scale integrated circuits (LSIs) and very-large-scale integrated circuits (VLSIs). These resins, however, contain chlorine which adversely affects the electrical properties typically of ICs, LSIs, and VLSIs.

In contrast, cycloaliphatic epoxy resins are free from chlorine and are excellent in electrical properties and thermal stability.

Commercially available cycloaliphatic epoxy resins include, for example, the EHPE series cycloaliphatic epoxy resins available from Daicel Chemical Industries, Ltd. (disclosed typically in Japanese Examined Patent Application Publication (JP-B) No. S63-31493, JP-B No. H04-10471, and JP-B No. H06-25194). These epoxy resins are widely used as sealing agents for electronics, hardeners typically for powder coatings, and sizing agents (binders) for glass fibers, because they are high in reactivity of epoxy group and yield cured products having high glass transition temperature (Tg) and being highly transparent. The cycloaliphatic epoxy resins have a polyether structure in which an oxirane ring of a cyclohexene oxide having a vinyl group in its side chain, such as 4-vinylcyclohexene-1-oxide, is opened and polymerized, and the vinyl group is epoxidized. Of the EHPE series resins, EHPE 3150 resin is a solid epoxy resin and is easily handled. The resulting cured product thereof, however, absorbs water more than cured products derived from bisphenol-A type epoxy resins and novolac type epoxy resins.

The cured product of EHPE 3150 is susceptible to improvements in electrical properties and may not be always said as being sufficient for use as insulating and sealing agents for electronics, such as sealants for semiconductors. Under these circumstances, it has been found that the EHPE series cycloaliphatic epoxy resins are improved in water absorptivity by leaving part of vinyl groups in their oxycylohexane skeleton unreacted, namely, by relatively reducing the degree of epoxidation (JP-B No. H07-25864). The resulting epoxy resin, however, invites new problems, because it has a decreased softening point, is thereby very susceptible to blocking at ordinary temperature, and the cured product of the resin has a significantly reduced glass transition temperature Tg. Japanese Unexamined Patent Application Publication (JP-A) No. H02-28211 proposes an attempt for improving the water absorptivity of the EHPE series cycloaliphatic epoxy resins by adding an organopolysiloxane compound to residual vinyl groups in the vinylcyclohexane skeleton of the resins. According to this technique, however, a resin having sufficient thermal stability has not yet been obtained, although the resulting resin has water absorption improved to some extent. JP-A No. H03-123775 discloses a technique of improving blocking resistance by incorporating a small amount of a compound having two epoxy groups into 4-vinylcyclohexene-1-oxide which gives the vinyl-substituted oxycyclohexane skeleton in the EHPE cycloaliphatic epoxy resins. By satisfying this, an intramolecularly crosslinking structure is formed to thereby elevate the softening point of the resulting resins. According to this technique, however, the water absorptivity of the cured product is improved poorly.

### Disclosure of Invention

After intensive investigations, the present inventors have found that the blocking of epoxy resins at ordinary temperature, the water absorptivity and significantly reduced glass transition temperature Tg of cured products of epoxy resins can be avoided by subjecting 4-vinylcyclohexene-1-oxide alone or in combination with another epoxy compound having at least one epoxy group to ring-opening of epoxy groups and polymerization using a silicone resin as an initiating agent, which silicone resin has silanol group and is solid at ordinary temperature; and epoxidizing residual vinyl groups using an oxidizing agent. The present invention has been accomplished based on these findings.

Specifically, the present invention provides, as a first embodiment, a silicone-modified epoxy resin (D) comprising a structural unit represented by following Formula (4), the epoxy resin (D) being a product of the epoxidation of a vinyl group of a vinyl-containing polyether compound (C) with an oxidizing agent, the vinyl-containing polyether compound (C) having a structural unit represented by following Formula (3) and being a product of the reaction between an epoxy group of 4-vinylcyclohexene-1-oxide (A) represented by following Formula (1) and a silanol group of a silanol-containing organopolysiloxane (B) represented by following Average Compositional Formula (2):

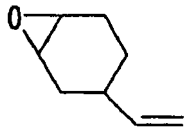

(1)

$R_aSi(OH)_bO_{(4-a-b)/2}$ (2)

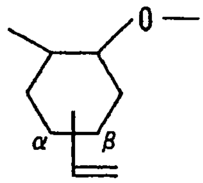

(3)

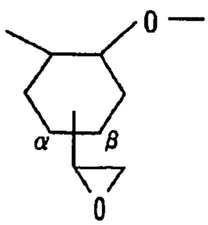

(4)

wherein, in Formula (2), "a" is 0.01 to 1.99; "b" is 1.99 to 0.01; and R is a residue of a monovalent organic compound having one to nine carbon atoms; and wherein the vinyl group in Formula (3) and the epoxy group in Formula (4) are bound at the alpha-position or the beta-position in Formulae (3) and (4), respectively.

The present invention further provides, as a second embodiment, the silicone-modified epoxy resin (D) according to the first embodiment, in which the oxidizing agent comprises an organic percarboxylic acid.

The present invention also provides, as a third aspect, the silicone-modified epoxy resin (D) according to one of the first and second embodiments, in which the silanol-containing organopolysiloxane (B) comprises a monomethylsilicone resin.

In the silicone-modified epoxy resin (D) according to one of the first, second, and third embodiments, the epoxy group of 4-vinylcyclohexene-1-oxide (A) may be subjected to ring-opening reaction by the catalysis of a Lewis acid (fourth embodiment).

In the silicone-modified epoxy resin (D) according to the forth embodiment, the Lewis acid may comprise a boron trifluoride ($BF_3$) complex (fifth embodiment).

In the silicone-modified epoxy resin (D) according to the second embodiment, the organic percarboxylic acid may be a product of the oxidation of a corresponding aldehyde with air or oxygen (sixth embodiment).

In the silicone-modified epoxy resin (D) according to the sixth embodiment, the organic percarboxylic acid may have a water content of 0.8 percent by weight or less (seventh embodiment).

In the silicone-modified epoxy resin (D) according to any one of second, sixth, and seventh embodiments, the organic percarboxylic acid may comprise peracetic acid (eighth embodiment).

In the silicone-modified epoxy resin (D) according to eighth embodiment, the peracetic acid may be as a solution in ethyl acetate (ninth embodiment).

The silicone-modified epoxy resin (D) according to any one of first to ninth embodiments may have an oxirane oxygen content of 1.0 to 10 percent by weight (tenth embodiment).

Brief Description of the Drawings

Fig. 1 is the $^1$H-NMR chart of a corresponding compound to Formula (2) as Component (B) used in Preparation Example 1.

Fig. 2 is the $^1$H-NMR chart of a corresponding compound having a structural unit represented by Formula (3) prepared according to Preparation Example 1.

Fig. 3 is the $^1$H-NMR chart of a corresponding compound having a structural unit represented by Formula (4) as a silicone-modified epoxy resin (D) according to the present invention, prepared according to Preparation Example 1.

Best Mode for Carrying Out the Invention

Some embodiments of the present invention will be illustrated below.

According to an embodiment of the present invention, a silicone-modified epoxy resin (D) may be obtained by reacting 4-vinylcyclohexene-1-oxide (A) and a silanol-containing organopolysiloxane (B) to yield a vinyl-containing polyether compound (C) (first-stage reaction), and epoxidizing the vinyl-containing polyether compound (C) (second-stage reaction).

The silanol-containing organopolysiloxane (B) represented by Formula (2) is an organopolysiloxane having silanol groups in the molecule and is a silicone resin having a weight-average molecular weight in terms of polystyrene of 500 to 100,000.

The first-stage reaction for the production of the silicone-modified epoxy resin (D) according to the present invention yields a vinyl-containing polyether compound (C) having a structural unit represented by following Formula (3) :

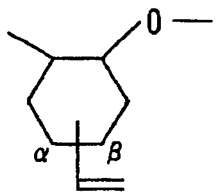

(3)

wherein the vinyl group is bound at the alpha-position or beta-position.

The vinyl-containing polyether compound (C) having the structural unit represented by Formula (3) may be obtained by reacting silanolic hydroxy groups of the organopolysiloxane (B) and epoxy groups of 4-vinylcyclohexene-1-oxide as Component (A) and optionally used another compound having at least one epoxy group in the presence of a catalyst.

In the first-stage reaction, the reaction ratio corresponds to the ratio of the number of epoxy groups of 4-vinylcyclohexene-1-oxide as Component (A) and optionally used another compound having at least one epoxy group to the number of silanolic hydroxy groups of the organopolysiloxane as Component (B). The molecular weight of the resulting compound may be adjusted by varying the ratio.

More specifically, two to thirty epoxy groups of the total of 4-vinylcyclohexene-1-oxide as Component (A) and optionally used another compound having at least one epoxy group are preferably reacted per one silanolic hydroxy group.

If the total number of epoxy groups exceeds 30, the resulting compound may be a solid having an excessively high melting point and may not be practically usable. Taking the case where the optionally-used compound having at least one epoxy group is not used as an example, the terminal of a' chain of the structural unit represented by Formula (3) is a hydroxy group formed by hydrogen being combined with the oxygen atom at the binding terminal shown in Formula (3).

The proportions of 4-vinylcyclohexene-1-oxide as Component (A) and the optionally used compound having at least one epoxy group are such that 1 to 100 percent by mole, preferably 20 to 100 percent by mole of 4-vinylcyclohexene-1-oxide as Component (A) is used relative to 99 to 0 percent by mole, preferably 80 to 0 percent by mole of the optionally used compound having at least one epoxy group, assuming that the total of the two components being 100 percent by mole. If the proportion of 4-vinylcyclohexene-1-oxide as Component (A) is less than 1 percent by mole, the advantages due to the cyclohexane skeleton of this compound may not be sufficiently exhibited.

The optionally used compound having at least one epoxy group includes, for example, aliphatic epoxy compounds such as glycidyl methacrylate and alpha-olefin oxides; cycloaliphatic epoxy compounds such as epoxidized

tetrahydrobenzyl alcohol, 3,4-epoxycyclohexylmethyl (meth)acrylate, cyclohexene oxide, and dicyclopentadiene dioxide; and aromatic epoxy compounds such as styrene oxide. Among them, aliphatic epoxy compounds are preferred.

The organosiloxane as Component (B) serving as an initiator of ring-opening reaction of epoxy groups contains silanol groups in the molecule has an average composition represented by Formula (2):

$$R_aSi(OH)_bO_{(4-a-b)/2} \qquad (2)$$

In Formula (2), "a" and "b" are arbitrary values satisfying the relational formula: a+b = 2+2/n, wherein "n" is the degree of polymerization. The value "a" is preferably 0.01 to 1.99, and more preferably 0.5 to 1.5, and the value "b" is preferably 0.01 to 1.99, and more preferably 0.01 to 1. The substituent R represents a monovalent organic group having one to nine carbon atoms. The organosiloxane is a silicone resin having a weight-average molecular weight in terms of polystyrene of 500 to 100,000.

Examples of the substituent R in Average Compositional Formula (2) include alkyl groups such as methyl group, ethyl group, n-propyl group, isopropyl group, and butyl group; fluoroalkyl groups such as 3,3,3-trifluoropropyl group; aryl groups such as phenyl group; as well as gamma-chloropropyl group, vinyl group, gamma-methacryloxypropyl group, gamma-glycidoxypropyl group, beta-(3,4-epoxycyclohexyl)ethyl group, N-(beta-aminoethyl)-gamma-aminopropyl group, gamma-aminopropyl group, and gamma-mercaptopropyl group.

The silicon resin may be any of commercially available products as varnishes for coating (painting) or electrical use, or silanol-containing modification intermediates available typically from silicone manufacturers. Specific examples thereof are the products under the trade names of TSR 127B and TSR 160 from Toshiba Silicone Corporation; KR 212, KR 216, and KR 311 from Shin-Etsu Chemical Co., Ltd.; and SH 6018 from Dow Corning Toray Silicone Co., Ltd. The silicone resins are supplied as solutions dissolved in organic solvents such as toluene and xylene; or flake-like solids.

The catalyst for use in the reaction includes, for example, amines (such as methylamine, ethylamine, propylamine, and piperazine), pyridines, imidazoles, and other organic bases; quaternary ammonium salts such as tetrabutylammonium bromide; organic acids such as formic acid, acetic acid, and propionic acid; inorganic acids such as sulfuric acid and hydrochloric acid; alcoholates of alkali metals, such as sodium methylate; alkalis such as KOH and NaOH; Lewis acids such as $BF_3$, $ZnCl_2$, $AlCl_3$, and $SnCl_4$, and complexes thereof; and organometallic compounds such as triethyl aluminium and diethyl zinc. Of these catalysts, Lewis acids are preferred, of which boron trifluoride ($BF_3$) etherate is more preferred.

The amount of the catalyst may be 0.01 to 10 percent by weight, and preferably 0.1 to 5 percent by weight, relative to the starting materials, while it varies depending on the type of the catalyst.

The reaction temperature may be -20°C to 200°C and is preferably 0°C to 120°C. The reaction may be carried out using a solvent. The solvent is preferably any of solvents having no active hydrogen, including ketones such as acetone, methyl ethyl ketone, and methyl isobutyl ketone; aromatic hydrocarbons such as benzene, toluene, and xylenes; aliphatic hydrocarbons such as hexane and cyclohexane; and ester solvents such as ethyl acetate.

A silicone-modified epoxy resin (D) according to the present invention may be prepared by epoxidizing a polyether compound (C) having vinyl group in its side chain with an oxidizing agent such as a peracid or hydroperoxide in the second-stage reaction, which polyether compound (C) has the structural unit represented by Formula (3), contains a vinyl group in its side chain, and is prepared as a result of the first-stage reaction. The resulting silicone-modified epoxy resin (D) according to the present invention is a compound having a structural unit represented by following Formula (4). Taking the case where the optionally-used compound having at least one epoxy group is not used as an example, the terminal of a chain of the structural unit represented by Formula (4) is a hydroxy group formed by hydrogen being combined with the oxygen atom at the binding terminal shown in Formula (4). The binding terminal in Formula (4) may be partially converted typically into an acyloxy group (carboxyl ester), or an alkoxy group (alkyl ether) under some reaction conditions of the epoxy ring-opening polymerization as the fist-stage reaction and/or the epoxidation as the second-stage reaction.

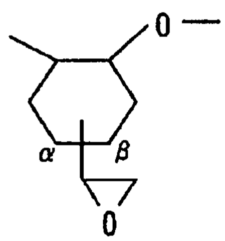

(4)

wherein the epoxy group is bound at the alpha-position or beta-position.

Usable peracids include organic percarboxylic acids, such as performic acid, peracetic acid, perbenzoic acid, and trifluoroperacetic acid. Of organic percarboxylic acids, those prepared as a result of the oxidation of a corresponding aldehyde with air or oxygen are preferred. This is because they have a low water content and yield a higher degree of epoxidation in the silicone-modified epoxy resin (D) according to the present invention. More specifically, such organic percarboxylic acids preferably have a water content of 0.8 percent by weight or less. Part of epoxy groups as in Formula (4) can be left unreacted as vinyl groups derived from 4-vinylcyclohexene-1-oxide as the starting material Component (A), by appropriately setting conditions for the epoxidation reaction.

Of organic percarboxylic acids, peracetic acid is preferred as an epoxidizing agent, because it is industrially inexpensively available and is highly stable.

The hydroperoxides may be hydrogen peroxide, tert-butyl hydroperoxide, and cumene peroxide.

A catalyst may be used in epoxidation according to necessity.

When a peracid is used, for example, a catalyst including a base such as sodium carbonate, or an acid such as sulfuric acid may be used.

When a hydroperoxide is used, the catalytic activity may be obtained by using a mixture of tungstic acid and sodium hydroxide in combination with hydrogen peroxide, using an organic acid in combination with hydrogen peroxide, or using molybdenum hexacarbonyl in combination with tert-butyl hydroperoxide. The epoxidation reaction is carried out while adjusting conditions, such as the presence or absence of a solvent and the reaction temperature, according to the apparatus and properties of the materials.

Usable reaction temperatures are determined depending on the reactivity of epoxidizing agent to be used. Taking peracetic acid, which is a preferred epoxidizing agent, as an example, the reaction temperature is preferably set at 0°C to 70°C. If it is lower than 0°C, the reaction proceeds slowly, and if it is 70°C, peracetic acid may decompose.

In the system including molybdenum dioxide diacetylacetonate in combination with tart-butyl hydroperoxide as an example of the hydroperoxide, the reaction temperature is preferably set at 20°C to 150°C, for the same reason as above. The solvent can be used for reducing the viscosity of materials, and diluting and thereby stabilizing the epoxidizing agent.

When peracetic acid is used, the solvent can be, for example, aromatic compounds, ether compounds, ester compounds, and ketone compounds.

The molar ratio of the epoxidizing agent to vinyl group in the polyether compound (C) having a structural unit represented by Formula (3) is preferably set at 0.9 time or more, in the preparation of the silicone-modified epoxy resin (D) according to the present invention. When peracetic acid is used, the molar ratio is preferably set at 0.95 to 1.2. The target compound may be taken out from a crude reaction mixture according to a regular chemical engineering procedure such as concentration.

EXAMPLES

The present invention will be illustrated in further detail with reference to several examples below. It should be noted, however, these examples are never intended to limit the scope of the present invention.

[PREPARATION EXAMPLE 1]

The commercially available silicone resin SH 6018 (187 g) as Component (B) and 4-vinylcyclohexene-1-oxide (620 g) as Component (A) were mixed, and 200 g of a 10% solution of boron trifluoride etherate in ethyl acetate was added dropwise at 50°C over four hours. The silicone resin is the product of Dow Corning Toray Silicone Co., Ltd., looks like flakes, is a solid, and has a hydroxy group content of 6.4 percent by weight and a melting point of 85°C.

The crude reaction mixture was combined with ethyl acetate and was washed with water. Next, the ethyl acetate layer was concentrated and thereby yielded 790 g of a vinyl-containing polyether compound as Component (C) [the compound having the structural unit represented by Formula (3)]. The compound has a weight-average molecular weight of 2740.

In 350 g of ethyl acetate was dissolved 660 g of the compound having the structural unit of Formula (3). The solution was placed in a reactor, and a 30 percent by weight solution (1067 g) of peracetic acid (320 g; a molar ratio to vinyl group of 1.0) in ethyl acetate was added dropwise at 50°C over four hours.

After the completion of dropwise addition, the mixture was further aged at 50°C for two hours. After removing acetic acid, ethyl acetate, and peracetic acid, the residue was dissolved again in ethyl acetate and was washed with distilled water. The ethyl acetate layer was concentrated and thereby yielded a compound having the structural unit of Formula (4), namely a silicone-modified epoxy resin (D) according to the present invention.

Chemical analyses of the target resin revealed that it has an oxirane oxygen content of 7.60% and a softening point of 73.7°C. The $^1$H-NMR charts of the respective compounds and characterizations of the peaks in the charts are shown in the drawings.

Fig. 1 is the $^1$H-NMR chart of the corresponding compound of Formula (2) (the silicone resin SH-6018) as Component (B).
The $^1$H-NMR chart of SH-6018 shows that the absorption of proton in silanol group is observed at 4.8 ppm.
Fig. 2 is the $^1$H-NMR chart of the compound having the unit represented by Formula (3) as Component (C).
<Characterization of peaks in $^1$H-NMR chart of the compound having the unit represented by Formula (3)>
In the $^1$H-NMR chart of the compound having the unit represented by Formula (3), the peaks at around 5.7 and 4.9 ppm are caused by vinyl proton derived from 4-vinylcyclohexene-1-oxide of Formula (1), and the peak at 3.5 to 3.4 ppm is caused by methine proton formed as a result of ring-opening of epoxy group derived from 4-vinylcyclohexene-1-oxide. The absorption caused by the proton in silanol group at around 4.8 ppm obserbed in the $^1$H-NMR chart of SH-6018 disappears after the reaction as shown in Fig. 2.
Fig. 3 is the $^1$H-NMR chart of the corresponding compound having the structural unit represented by Formula (4) as Component (D).

<Characterization of peaks in $^1$H-NMR chart of the corresponding compound having the structural unit represented by Formula (4)>

The $^1$H-NMR chart of the corresponding compound having the structural unit represented by Formula (4) demonstrates that the peaks at around 5.7 and 4.9 ppm caused by vinyl proton (obserbed in the chart of the compound having the structural unit represented by Formula (3)) substantially disappear, but instead, peaks at around 2.7 and 2.5 ppm caused by epoxy proton formed as a result of epoxidation of vinyl group are observed.

[COMPARATIVE PREPARATION EXAMPLE 1]

(According to Preparation Example 1 of JP-B No. H07-25864)

To a mixture of 134 g (1 mol) of trimethylolpropane and 1860 g (15 mol) of 4-vinylcyclohexene-1-oxide was added dropwise 400 g of a 10% solution of boron trifluoride etherate in ethyl acetate at 50°C over four hours.
The crude reaction mixture was combined with ethyl acetate and was washed with water. Next, the ethyl acetate layer was concentrated and thereby yielded 1990 g of a vinyl-containing polyether compound.
Next, 500 g of this compound was dissolved in 250 g of ethyl acetate. The solution was placed in a reactor, and a 30 percent by weight solution of peracetic acid (286 g; a molar ratio to vinyl group of 1.0) in ethyl acetate (953 g) was added dropwise at 50°C over four hours. After the completion of dropwise addition, the mixture was further aged at 50°C for two hours.
After removing acetic acid, ethyl acetate, and peracetic acid, the residue was dissolved again in ethyl acetate and was washed with distilled water. The ethyl acetate layer was concentrated and thereby yielded an epoxy resin. Chemical analyses of the epoxy resin revealed that it has an oxirane oxygen content of 9.05% and a softening point of 68.4°C.

[COMPARATIVE PREPARATION EXAMPLE 2]

An epoxy resin was prepared by the procedure of EXAMPLE, except for charging 172 g of peracetic acid (molar ratio to vinyl group of 0.6).
Chemical analyses of the epoxy resin revealed that it has an oxirane oxygen content of 6.25% and a softening point of 58.6°C.

<Evaluation of epoxy resins and cured products thereof>

Evaluation of uncured epoxy resin:

Blocking resistance

[Test conditions]

Each 80 g of the epoxy resins prepared according to Preparation Example and Comparative Preparation Examples were charged (up to a height of about 5 cm) into a 250-ml cylindrical polypropylene vessel having a diameter of 6 cm and equipped with a screw lid, were left in a dryer at an internal temperature of 30°C, were taken out, and the resulting powders were observed and evaluated.
The powders were evaluated with five grades according to the following criteria.

Grade 5: The dry powder trickles smoothly when the vessel is placed in a slanting position.
Grade 4: The powder falls down when the vessel is placed upside down.
Grade 3: The powder is re-dispersed and falls down when the vessel is placed upside down and shaken.
Grade 2: The powder falls down when the vessel is placed upside down and tapped, but part thereof is fused and blocked.
Grade 1: The powder packs and does not fall down even when the vessel is tapped.

Table 1: Blocking resistance

| Sample | After 2 hrs | After 10 hrs | After 24 hrs | After 7 days |
|---|---|---|---|---|
| Epoxy resin of Pre. Ex. 1 | 5 | 5 | 4 | 3 |
| Epoxy resin of Com. Pre. Ex. 1 | 5 | 4 | 3 | 2 |
| Epoxy resin of Com. Pre. Ex. 2 | 3 | 2 | 1 | - |

Evaluation of cured products

[Dissolution and curing of epoxy resins]

Each of the epoxy resins prepared according to Preparation Example and Comparative Preparation Examples, a curing agent, and a curing accelerator were dissolved in acetone to a solid content of the resin of 75 percent by weight. Next, each necessary amount of the resulting solutions was cast in a vessel mentioned below.

A box 300 mm long, 200 mm wide, and 50 mm high was made from a release paper, was placed in an aluminum vessel, and each of the above-prepared solutions was cast therein to a net weight of 60 g.

After removing acetone and foams, the epoxy resins were cured under conditions of 110°C for one hour and then at 150°C for two hours. The curing agent and curing accelerator shown in following Table 2 were used in the numbers of parts in Table 2.

[Determination of glass transition temperature Tg]

The glass transition temperature Tg of a sample was determined by differential scanning calorimetry (DSC) according to the method of measuring transition temperatures of plastics (Japanese Industrial Standards (JIS) K 7121).

Rate of temperature rise: 5°C/min., from 30°C to 380°C

[Determination of water absorption]

A sample was left stand at 120°C and 95% relative humidity (RH) for ninety-six hours, the increase in weight of the sample thereafter was measured, and the water absorption was calculated according to the following expression as the average of three tests.

$$\text{Water absorption (\%)} = [(\text{Increase in weight after test})/(\text{Weight of sample before test})] \times 100$$

Table 2: Evaluation results of cured products

| | Example 1 | Comp. Ex. 1 | Comp. Ex. 2 |
|---|---|---|---|
| Epoxy resin<br>(Softening point °c) | Pre. Ex. 1<br>100<br>(73.7°C) | Com. Pre. Ex. 1<br>100<br>(68.4°C) | Com. Pre. Ex. 2<br>100<br>(58.6°C) |
| MH-700 | 78.8 | 94.4 | 62.2 |
| DBU (0.5 phr) | 0.89 | 0.97 | 0.81 |

(continued)

| | Example 1 | Comp. Ex. 1 | Comp. Ex. 2 |
|---|---|---|---|
| Tg (°C) | 311.9 | 320.9 | 256.3 |
| Water absorption (%) | 1.32 | 2.01 | 1.21 |

In Table 2, the amounts of the substances are indicated by part by weight, and the substances indicated by the abbreviations are as follows:

MH-700: Methylhexahydrophthalic anhydride (Rikacid MH-700, the product of New Japan Chemical Co., Ltd.) (curing agent)
DBU: 1,8-Diazabicyclo[5.4.0]undecene-7 (curing accelerator)

Industrial Applicability

The silicone-modified epoxy resins according to the present invention yield cured products having high glass transition temperature Tg, being excellent in thermal stability and having low water absorptivity. Accordingly, they are usable as excellent sealing materials for LSIs.

The silicone-modified epoxy resins according to the present invention are usable as replacements for epoxy resins conventionally used typically in coil impregnation. They advantageous have freely adjustable properties such as degree of polymerization and thereby have suitably adjusted performance, by adjusting the blending quantity of Compound (A). In addition, they are applicable to a wide variety of uses such as sealing materials for light emitting diodes (LEDs) and semiconductors, and paints and varnishes.

## Claims

1. A silicone-modified epoxy resin (D) comprising a structural unit represented by following Formula (4), the epoxy resin (D) being a product of the epoxidation of a vinyl group of a vinyl-containing polyether compound (C) with an oxidizing agent, the vinyl-containing polyether compound (C) having a structural unit represented by following Formula (3) and being a product of the reaction between an epoxy group of 4-vinylcyclohexene-1-oxide (A) represented by following Formula (1) and a silanol group of a silanol-containing organopolysiloxane (B) represented by following Average Compositional Formula (2):

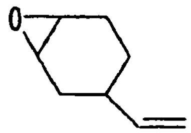

(1)

$$R_aSi(OH)_bO_{(4-a-b)/2} \quad (2)$$

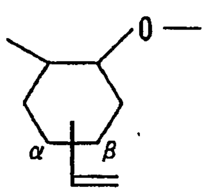

(3)

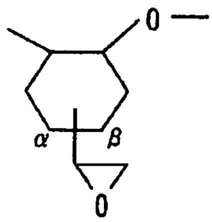

(4)

wherein, in Formula (2), "a" is 0.01 to 1.99; "b" is 1.99 to 0.01; and R is a residue of a monovalent organic compound having one to nine carbon atoms; and wherein the vinyl group in Formula (3) and the epoxy group in Formula (4) are bound at the alpha-position or the beta-position in Formulae (3) and (4), respectively.

2. The silicone-modified epoxy resin (D) according to claim 1, wherein the oxidizing agent comprises an organic percarboxylic acid.

3. The silicone-modified epoxy resin (D) according to one of claims 1 and 2, wherein the silanol-containing organopolysiloxane (B) comprises a monomethylsilicone resin.

4. The silicone-modified epoxy resin (D) according to any one of claims 1 to 3, wherein the epoxy group of 4-vinylcyclohexene-1-oxide (A) has been subjected to ring-opening reaction by the catalysis of a Lewis acid.

5. The silicone-modified epoxy resin (D) according to claim 4, wherein the Lewis acid comprises a boron trifluoride ($BF_3$) complex.

6. The silicone-modified epoxy resin (D) according to claim 2, wherein the organic percarboxylic acid is a product of the oxidation of a corresponding aldehyde with air or oxygen.

7. The silicone-modified epoxy resin (D) according to claim 6, wherein the organic percarboxylic acid has a water content of 0.8 percent by weight or less.

8. The silicone-modified epoxy resin (D) according to any one of claims 2, 6, and 7, wherein the organic percarboxylic acid comprises peracetic acid.

9. The silicone-modified epoxy resin (D) according to claim 8, wherein the peracetic acid is as a solution in ethyl acetate.

10. The silicone-modified epoxy resin (D) according to any one of claims 1 to 9, which has an oxirane oxygen content of 1.0 to 10 percent by weight.

Fig.1

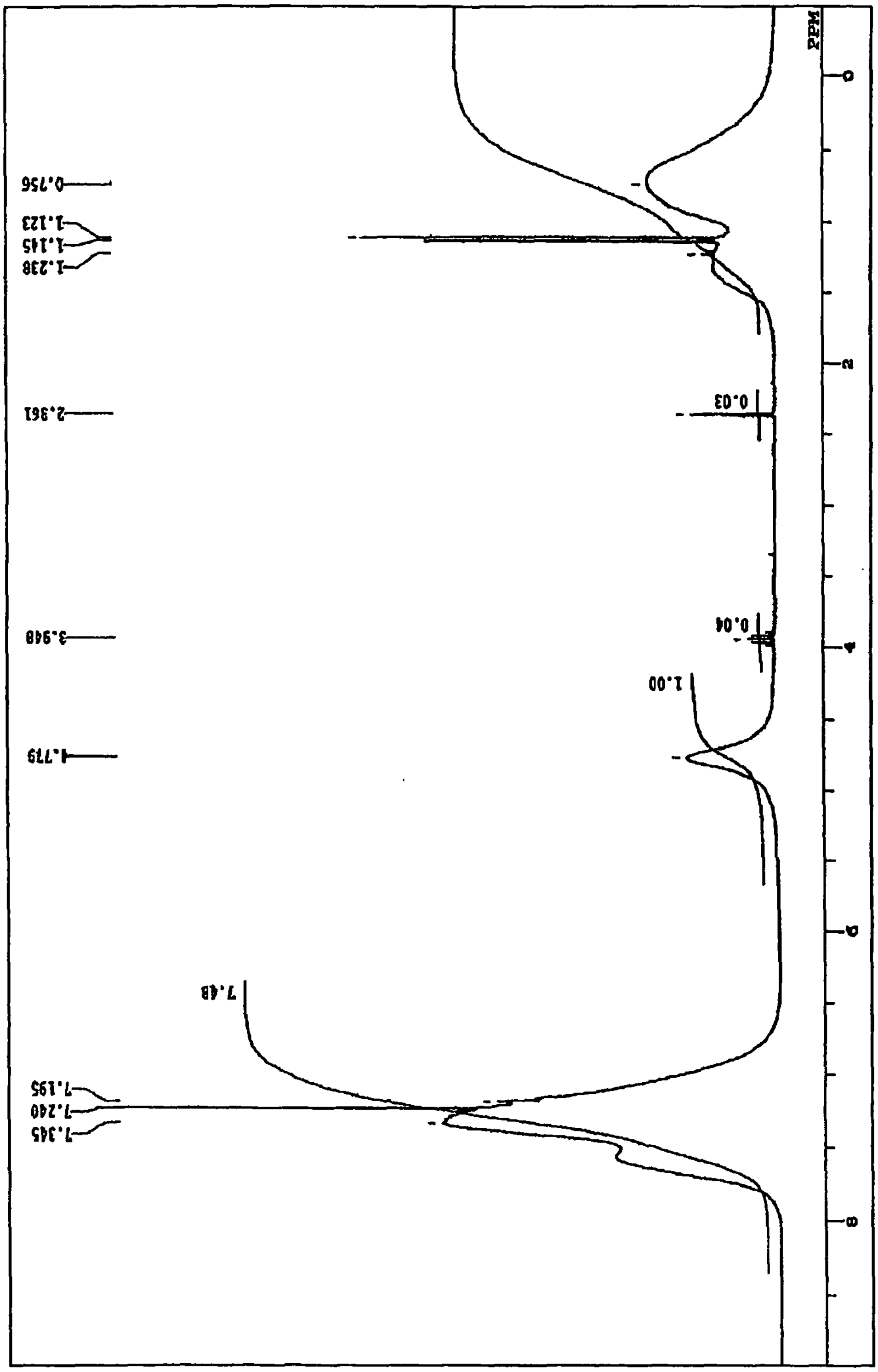
0.756
1.123
1.145
1.238
2.361
3.948
4.719
7.195
7.240
7.345
7.48
1.00
0.03
0.04
PPM
0
2
4
6
8

Fig.2

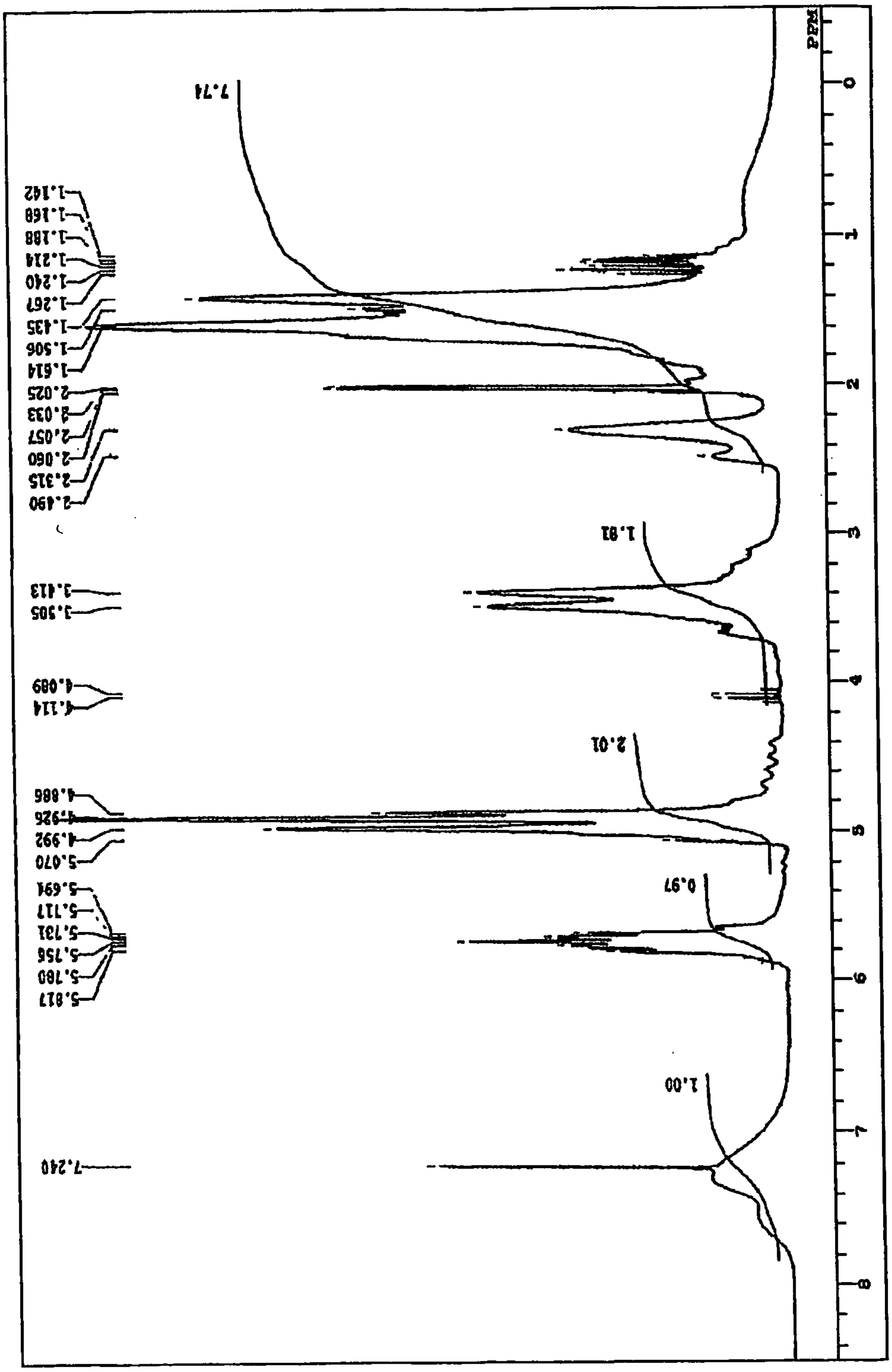
7.74
1.81
2.01
0.97
1.00
1.142
1.168
1.188
1.214
1.240
1.267
1.435
1.506
1.614
2.025
2.033
2.057
2.060
2.315
2.490
3.413
3.505
4.089
4.114
4.886
4.926
4.992
5.070
5.694
5.717
5.731
5.756
5.780
5.817
7.240
PPM
0
1
2
3
4
5
6
7
8

Fig.3

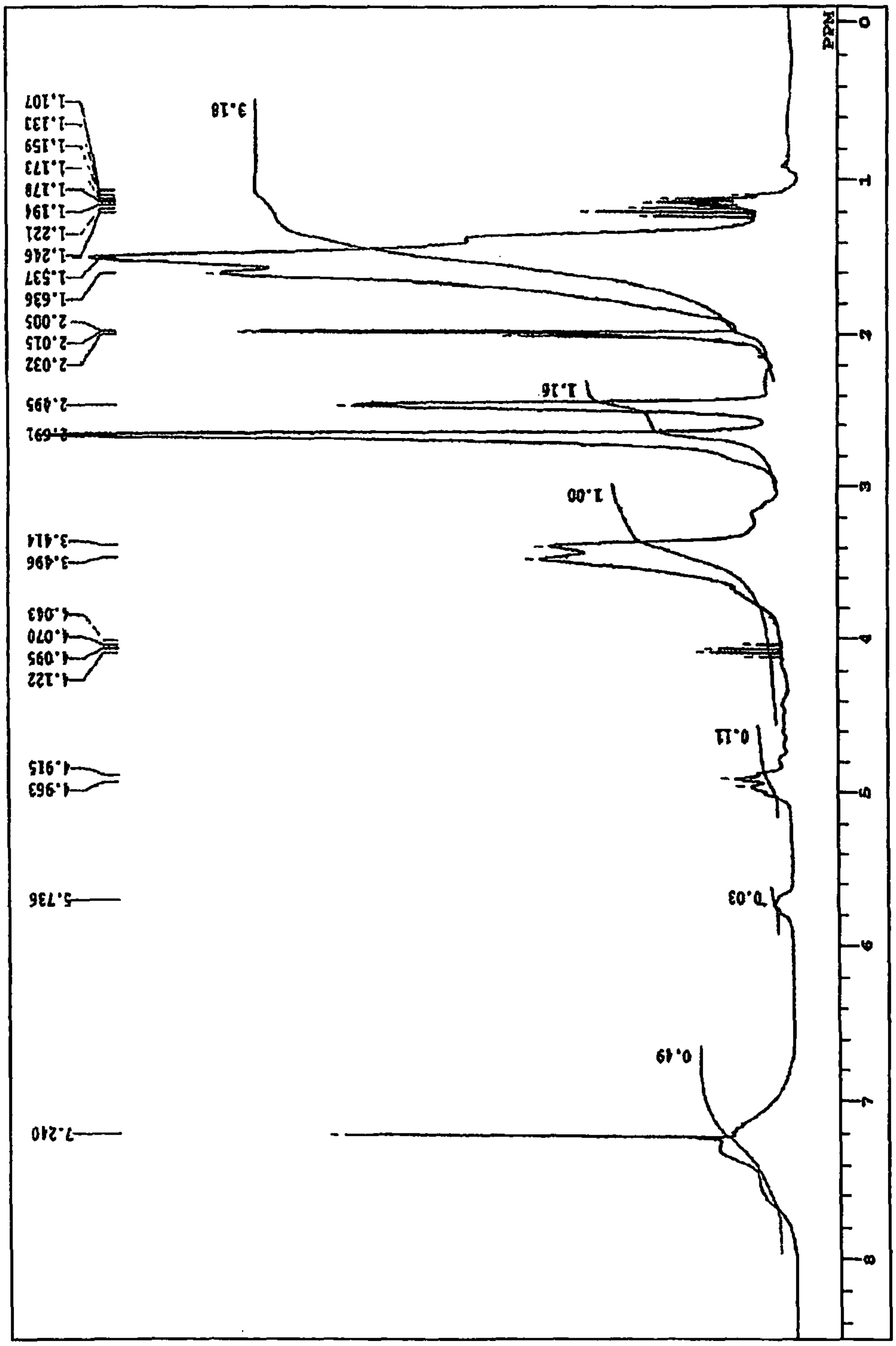
PPM
1.107
1.133
1.159
1.173
1.178
1.194
1.221
1.246
1.537
1.636
2.005
2.015
2.032
2.495
2.691
3.414
3.496
4.063
4.070
4.095
4.122
4.915
4.963
5.736
7.210
3.18
1.16
1.00
0.11
0.03
0.49

## INTERNATIONAL SEARCH REPORT

International application No.
PCT/JP2004/008299

A. CLASSIFICATION OF SUBJECT MATTER
Int.Cl[7] C08G77/14

According to International Patent Classification (IPC) or to both national classification and IPC

B. FIELDS SEARCHED

Minimum documentation searched (classification system followed by classification symbols)
Int.Cl[7] C08G77/14-77/18, C08G59/00-59/72

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| E,X | JP 2004-250604 A1 (Daicel Chemical Industries, Ltd.), 09 September, 2004 (09.09.04), Full text (Family: none) | 1-10 |
| A | JP 62-45644 A1 (Daicel Chemical Industries, Ltd.), 27 February, 1987 (27.02.87), Full text (Family: none) | 1-10 |
| A | JP 2-225516 A1 (General Electric Co.), 07 September, 1990 (07.09.90), Full text & US 4640967 A | 1-10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 September, 2004 (03.09.04) | 21 September, 2004 (21.09.04) |
| Name and mailing address of the ISA/ Japanese Patent Office | Authorized officer |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S6331493 B
- JP H0410471 B
- JP H0625194 B
- JP H0725864 B
- JP H0228211 A
- JP H03123775 A